# EUROPEAN PATENT APPLICATION

(11) **EP 4 715 683 A1**
(43) Date of publication of application: **25.03.2026**
(21) Application number: 24201378.7
(22) Date of filing: 19.09.2024
(51) Int. Cl.: G06N 5/022, G06N 20/00

(54) **SYSTEM AND METHOD FOR GENERATING A SELF-LEARNING KNOWLEDGE BASE FOR A PERSONALIZED USER EXPERIENCE FOR USERS INTERACTING WITH A SOFTWARE APPLICATION**

(71) Applicant: Siemens Aktiengesellschaft, 80333 München (DE)
(72) Inventor: KHARKAR, Nayan, 445304 Yavatmal, Maharashtra (IN); SINGH, Saurabh Narayan, 81739 München (DE)
(74) Representative: HKW Intellectual Property PartG mbB

(57) **Abstract**

Disclosed is a method (300) and system (100) for generating a self-learning knowledge base (110, 534) for a personalized user experience for users (438) interacting with a software application (102-1 to 102-N, 402). The method comprises receiving, data from a plurality of software applications that the users interact therewith. The method comprises extracting a first set of features pertaining to objects in the application data, a second set of features pertaining to user interface (UI) components in the application data, and a third set of features pertaining to each predefined persona interacting with the UI components. The method comprises labelling the first set of features, the second set of features, and the third set of features using a data labelling model (506). The method comprises storing the labelled data in a predefined format in the knowledge base. The method comprises continuously updating the knowledge base with the extracted data and persona profiles generated from the extracted data.

## Description

The present invention generally relates to software applications, and more specifically to a method and system for generating a self-learning knowledge base for a personalized user experience for users interacting with a software application.

A software application refers to any computer and other electronic device-based application, including web-based applications, desktop applications and immersive applications running on mobile devices, headsets and other computer platforms. The software application in this context must have a user-based interaction framework based on which different classes of users communicate with and use the application. In an agile continuous design and development model for software applications, the software design and interaction pattern with the users can be changed and updated every release cycle. Since the users of an application are of different classes and can have different personas, requirements, capabilities and accessibility preferences, a software application must support the different requirements to be more usable and user friendly.

Software architecture borrows a lot from classical building architecture and is also similar to that in the nature of deliverable. Despite agile delivery mechanisms, the end delivery of software applications is not very flexible when it comes to usability and user experience. It is tied within a framework. For example, most software applications do not take into consideration the dexterity of the end user in their design. A right-handed user gets the same application interface as the left-handed user. Similarly, users with different neurological profiles and preferences work with the same application interface. In theory, the modularity of the modern software applications allows for quick change in design to match different requirements. But this is still tied with the release cycles as well as the overall requirements and user personas fed to the architecture at the time of design. There are software applications with user interfaces which use the micro frontend architecture and modular modals allowing users to rearrange and customize the interface based on their preferences and needs.

The major challenge with the aforementioned approaches is the fact that there is no way to learn from user preferences and dynamically update the user interfaces for individual users to create a meaningful and personalized user experience while maintaining the uniformity of the overall application across its userbase. Either the responsibility is delegated to the end user to customize the interface, and every user must do it, or a certain set of predefined personas are created during the creation of the application and user can choose from the pre-defined segment. These approaches, even though more flexible than a rigid single interface approach, still do not provide enough flexibility and custom experience to the end user.

In addition, the problem is even more complex in 3D environments. In the realm of computer simulated environments or specifically metaverse applications, a multitude of personas, each with their unique motivations and objectives, coexist within the virtual landscape. Current metaverse applications are limited in the way that for a specific persona they host tasks and workflows for a pre-defined set objective. However, since metaverse applications should be immersive, a requirement is to be able to build metaverse applications which should be driven by persona's motivation. With the evolving context in the metaverse, a fresh set of objectives for a persona can emerge accompanied by corresponding series of tasks. "Environment" & "UI" compositions are used by personas to accomplish tasks in metaverse applications, and therefore a new series of tasks invite building of new 3D environment objects and UI elements which is a manual process of research, design, development, and testing. And therefore, realizing these new set of objectives in the metaverse application is subject to delay equivalent to the R&D time, thus hindering a real-time creation of personalize user interfaces and experiences. Furthermore, extracting the right set of features for identifying new objectives and personas in the environment in order to identify new personas and generate personalized user interfaces is also challenging. If the right features are not extracted, the resulting intelligence model may struggle to capture the intricate nuances of metaverse interactions, yielding suboptimal results.

In light of the above, there exists a need to provide a system and method for generating a self-learning knowledge base for a personalized user experience for users interacting in with a software application by learning patterns of interactions of the users with the software applications.

Therefore, the object of the invention is to provide a system and method for generating a self-learning knowledge base for a personalized user experience for users interacting in with a software application.

The object of the invention is achieved by a method for generating a self-learning knowledge base for a personalized user experience for users interacting in with a software application. The method comprises receiving, data from a plurality of applications that the users interact therewith. The data comprises application data and interactions of the users with the applications. The method comprises extracting a first set of features pertaining to objects in the data. The first set of features are related to at least one of: coordinates of the objects from the application data, actions of the objects from the application data, and contextual understanding of objects with respect to the other objects therein. The method comprises extracting a second set of features pertaining to user interface (UI) components in the application data. The second set of features are related to at least one of: coordinates of UI components from the application data, design layout of the UI components from the simulated data, user interactions with the UI components from the simulated data, and contextual understanding of UI components from the simulated data. The method comprises extracting a third set of features pertaining to each predefined persona interacting with the UI components, wherein the third set of features are related to at least one of: objective of the persona, task of the persona, coordinates of the persona, and relative position of the persona with respect to UI components to accomplish the task. The method comprises labelling the first set of features, the second set of features, and the third set of features using a data labelling model, wherein the data labelling model is trained on previously labelled data comprising objects, UI components, and personas and a relationship therebetween. The method comprises storing the labelled data in a predefined format in the knowledge base. Herein, the predefined format is a hierarchical structure for storing information related to objects, UI components, and personas and relationships therebetween.

The method comprises continuously updating the knowledge base with the extracted data and persona profiles generated from the extracted data.

According to an embodiment, the method comprises identifying one or more patterns in the knowledge base using a trained machine learning model. Herein, the one or more patterns comprises associating different features with specific personas, their objectives, and the objects and UI elements that are relevant to objective and its tasks. Further, the method comprises clustering data for each persona in the knowledge base based on the identified patterns into one or more persona profiles, wherein the one or more persona profiles define behavior and interaction of each persona with the UI components.

According to an embodiment, the method further comprises identifying new personas from the knowledge base based on the identified one or more patterns, wherein the new personas are defined for personas that are not predefined for the application.

According to an embodiment, the data is simulated data acquired from computer simulated environments.

According to an embodiment, the method of extracting the first set of features comprises identifying 3D objects from the plurality of applications using computer vision techniques. The method comprises identifying 3D compositions from the plurality of applications using semantic segmentation algorithms. The method comprises extracting coordinates of the 3D objects, actions of the 3Dobjects, and relative positions of each of the 3D objects by analyzing the identified 3D objects and 3D compositions.

According to an embodiment, the method of extracting the second set of features comprises identifying, by the processing unit, UI compositions and UI elements from the plurality of applications for text-based UI components using OCR techniques. The method comprises identifying UI compositions and UI elements from the plurality of applications for image-based UI components using image analysis techniques. The method comprises extracting coordinates of UI components, design layout of the UI components, user interactions with the UI components, and contextual understanding of UI components by analyzing the identified UI compositions and UI elements using DOM parsing techniques.

According to an embodiment, the method of extracting the third set of features comprises identifying interactions between different users and the UI components from the plurality of applications by recording inputs from the users. The method comprises extracting objective of the persona, task of the persona, motivation of the persona, coordinates of the persona, and relative position of the persona with respect to UI components to accomplish the task based on analyzing the inputs from the users.

According to an embodiment, the method of extracting the first set of features, the second set of features and the third set of features comprises acquiring, a source code of the software application. The method comprises parsing the software code to identify an identifier and corresponding tags associated with each of the objects, UI components, and interaction between UI components and the user. Further, the method comprises extracting the first set of features, the second set of features and the third set of features from the parsed source code.

According to an embodiment, the method of identifying a first set of patterns from the knowledge base by using the trained machine learning model comprises training the machine learning model on: node learning data for identifying objects in the knowledge base and tracking the 3D object using graph theory and semantic analysis techniques; actions learning data for analyzing actions and behaviors associated with the 3D objects in the knowledge base using graph theory and semantic analysis techniques; and context understanding data for analyzing event logs, user behavior patterns, object interactivity records, temporal and spatial relationship between different elements such as 3D objects, UI components, and personas using graph theory and semantic analysis techniques.

According to an embodiment, the method of identifying a second set of patterns from the knowledge base by using the trained machine learning model comprises training the machine learning model on node learning data for identifying UI components in the knowledge base using graph theory and semantic analysis techniques to learn the coordinates of the UI components; design comprehension data for identifying UI elements in the knowledge base using graph theory and semantic analysis techniques to learn how UI elements are structured to create a complete UI composition; interaction data for identifying user behavior, input methods, gesture recognition, user feedback, using event handling mechanism in the knowledge base to learn user interaction with the UI components; and context understanding data for identifying contextual information associated with the UI elements using graph and scene analysis on the knowledge base to learn relationships about position of UI elements, choice of design of UI element, interaction provided by the UI elements, and correlation between one or more UI elements.

According to an embodiment, a third set of patterns are identified from the knowledge base by using the second trained machine learning model comprises training the machine learning model on objective description data for identifying an objective of the persona from the knowledge base using sentiment analysis to learn objective and motivations of the persona in the application; and task identification data for identifying tasks to be performed by each persona in the application using graph theory and semantic analysis techniques to learn personas are involved in each task, their respective coordinates, and the associated 3D objects and UI elements required to accomplish these tasks.

According to an embodiment, the method further comprises identifying the persona profiles required for one or more downstream applications. The method comprises extracting data related to the persona profiles from the knowledge base for the downstream applications.

The object of the present invention is also achieved by an apparatus for generating a self-learning knowledge base for a personalized user experience for users interacting in with a software application. The apparatus comprises one or more processing units, memory communicatively coupled to the one or more processing units. The memory comprises a module stored in the form of machine-readable instructions executable by the one or more processing units. The module is configured to perform the aforementioned method steps.

The object of the invention is also achieved by a system for generating a self-learning knowledge base for a personalized user experience for users interacting in with a software application. The system comprises one or more data acquisition devices, for acquiring application data from the plurality of applications. The system comprises a database for storing the knowledge base acquired from a plurality of user applications. The system comprises the apparatus as aforementioned. The apparatus is communicatively coupled to the knowledge base.

The object of the invention is also achieved by a computer program product comprising machine readable instructions, that when executed by one or more processing units, cause the one or more processing units to perform the aforementioned method steps.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The present invention is further described hereinafter with reference to illustrated embodiments shown in the accompanying drawings, in which:
FIG 1 is a block diagram of a system for generating a self-learning knowledge base for a personalized user experience for users interacting in with a software application, according to an embodiment of the present invention;
FIG 2 is a block diagram of an exemplary apparatus for generating a self-learning knowledge base for a personalized user experience for users interacting in with a software application, according to an embodiment of the present invention;
FIG 3 is a flowchart depicting steps of a method for generating a self-learning knowledge base for a personalized user experience for users interacting in with a software application, according to an embodiment of the present invention;
FIG 4 is a block diagram depicting extraction of one or more features from the computer simulated application, according to an embodiment of the present invention; and
FIG 5 is a block diagram depicting the knowledge base creation framework, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

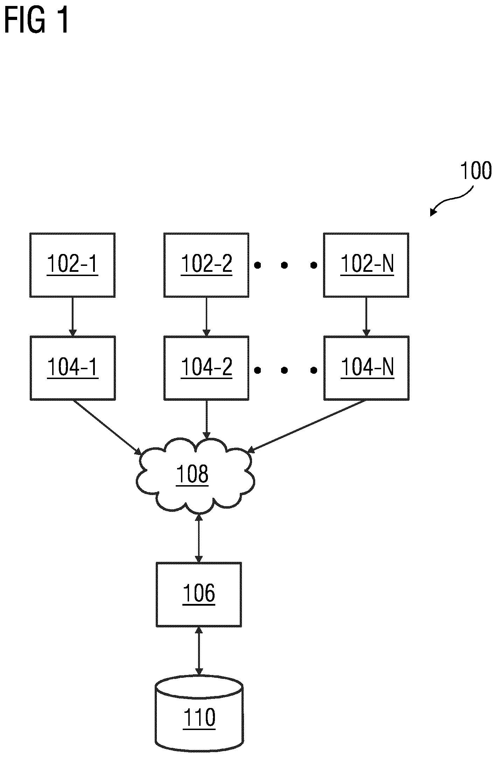

FIG 1 is a block diagram of a system 100 for generating a self-learning knowledge base for a personalized user experience for users interacting in with a software application, according to an embodiment of the present invention. The system 100 comprises a plurality of software applications 102-1 to 102-N communicatively coupled to one or more data acquisition devices 104-1 to 104-N. The one or more data acquisition devices 104-1 to 104-N are configured for acquiring data from the plurality of software application 102-1 to 102-N. The system 100 comprises an apparatus 106 communicatively coupled with the one or more data acquisitions devices 104-1 to 104-N and the plurality of software application 102-1 to 102-N via a communication network 108. Furthermore, the system 100 comprises a knowledge base 110 communicatively coupled to the apparatus 106 via the communication network 108 for storing the labelled data in a predefined format as processed by the apparatus 106.

Throughout the present disclosure, the term "software application" 102-1 to 102-N (or referred to as "application" hereinafter) refers to any computing device based application that interacts directly with the user through an interface and allows users to perform certain tasks based on the visual interface. The compute device can be a computer, a mobile phone, a panel based IoT device or a wearable extended reality peripheral like VR/AR headsets with or without a spatial computer onboard. Web applications are one example of such software applications, desktop applications another. 3D and extended reality applications like virtual reality and augmented reality applications will also fall under the domain of software applications.

Throughout the present disclosure, the term "users" refers to individual actors and stakeholders who interact with the software application 102-1 to 102-N to perform various tasks based on the domain, the type of software and intended outcome. There can be different kind of users in a software application. For example, an "end user" is the primary individual using the software application to perform designated tasks. For a virtual design system for a factory floor, end user can be the designers who use the system to design the factory, but also the verifiers who look at and approve the design. The purchaser who has ordered the design is another end user in the context. So, the end user can be divided under different categories based on the features and intended task. One another example classification of users can be the "power users". Power users are experienced and advanced users who leverage the complex capabilities of a software and embedded workflows which a traditional user might not.

Throughout the present disclosure, the term "user experience" for a software application 102-1 to 102-N defines how the user interacts with the application, the ease of usage, the intuitiveness, amount of explanation needed to interact with the application and overall, the interaction patterns and behavior expected by the user from the software application. A good user experience improves the ease of usage, positive interaction and overall user satisfaction while lowering the learning curve of the application, user error rate and churn rate. A personalized user experience takes user experience one step further by tailoring the interfaces of the same application differently for different users based on the diversity of the user groups by identifying patterns, profiles and personas among the user base. The term "personas" for software applications refers to different types of users that can be categorized based on behaviors, goals, needs, challenges, demographics, motivation, preferences, etc. While user experience is a generalized, one size fits all static approach to user experience, personal user experience meets the specific needs of individual users based on behavior and context and provide a dynamic and diverse experience across the user base while maintaining the uniformity under the software application umbrella.

Throughout the present disclosure, the term "application data" refers to a combination of "user data", "operational data", and "analytics data". The user data comprises of data related to user, their persona, preferences, settings and personal information including but not limited to their role, interaction patterns with components and features within the software application, preference data like handedness, color preferences, notification preferences, brightness and contrast preferences during specific times of the day and individual customized settings. The operational data refers to data generated during the lifecycle of the application when the user performs the core functions needed to achieve the intended result and complete the assigned task. The analytics data comprises of data collected to monitor and understand the performance of the application and interaction of the user with the application. This data comprises of various usage interactions including but not limited to features being used, their frequency of usage, interaction with environment components, time taken between different interactions, time taken between different interaction steps, amount of traversal of screen needed between interactions, search and lookups performed to identify the next step of task, various elements on the user interface and the user interaction with them within the context of task workflow and in the broader context of software application.

Throughout the present disclosure, the term "knowledge base" 110 refers to a database that is a structured or non-structured collection of data or information stored in a computer-readable format. The knowledge base 110 comprises one or more tables, each consisting of rows and columns, where data is organized, stored, and managed. The data within the knowledge base 110 can include text, numbers, images, audio, video, or any other form of electronic data. The database is designed to efficiently store, retrieve, and manipulate large volumes of data, enabling rapid access and retrieval of information for various applications. It provides a centralized repository for organizing and managing data, facilitating data integrity, consistency, and security. The data within the knowledge base 110 can be accessed, modified, or queried through a database management system (DBMS), which provides a set of software tools and interfaces to interact with the database. The DBMS allows users or applications to perform operations such as inserting, updating, deleting, or searching for data within the knowledge base 110 which may be of various types, including but not limited to relational databases, NoSQL databases, distributed databases, in-memory databases.

In context of the present invention, the knowledge base 110 is configured for the labelled data in a predefined format. The predefine format is a hierarchical structure for storing information related to objects, UI components, and personas and relationships therebetween. It should be noted that the knowledge base 110 is a collection of application data storing identified patterns and trends from the application data, mapping of the patterns to the user personas and profiles and recommendation of user interface designs and personalized user experience based on those patterns. The knowledge base 110 also comprises data from external sources and prior research to form the basis of the suggestion patterns. The data comprising but not limited to various default user personas and profiles, their respective profiles and preferences and various suggestions based on external sources. It will be appreciated that the knowledge base 110 is self-evolving based on new application data that is constantly collected and learned upon using the machine learning algorithms.

In one embodiment, the apparatus 106 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The apparatus 106 includes a module for generating a self-learning knowledge base for a personalized user experience for users interacting with a software application 102-1 to 102-N.

Particularly, the system 100 comprises a cloud computing device configured for efficiently rendering one or more scenes in a computer simulated environment from a first site to a second site in an industrial environment. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

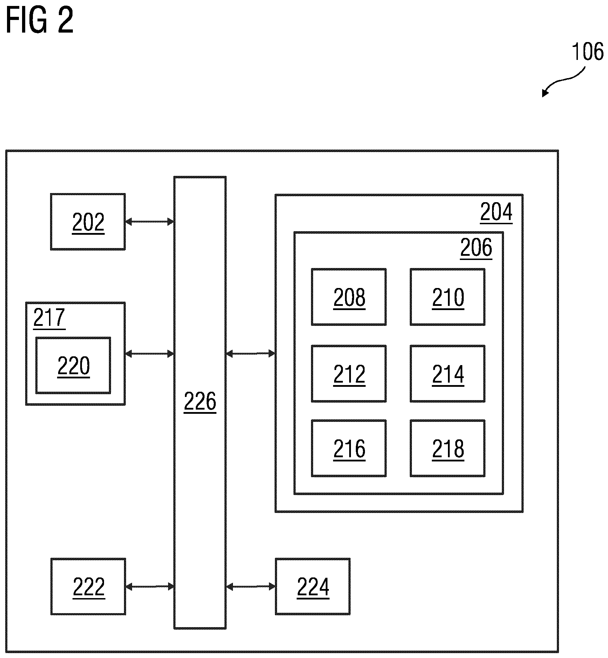

FIG 2 is a block diagram of an exemplary apparatus 106 for generating a self-learning knowledge base 110 for a personalized user experience for users interacting in with a software application, according to an embodiment of the present invention. In an exemplary embodiment, the apparatus 106 is communicatively coupled to the data acquisition device 104-1 to 104-N and the knowledge base 110. The apparatus 106 receives application data from the data acquisition devices 104-1 to 104-N, processes it and then stored the processed data in the knowledge base 110. The apparatus 106 applies machine learning algorithm on the data stored in the knowledge base 110 for identifying one or more patterns and new personas. Such information is also further stored in the knowledge base 110.

The apparatus 110 may be a personal computer, a laptop computer, a tablet, a server, a virtual machine, and the like. The apparatus 110 includes a processing unit 202, a memory 204 comprising a module 206, a storage unit 217 comprising a database 220, an input unit 222, an output unit 224 and a bus 226.

The processing unit 202 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 202 may also include embedded controllers, such as generic or programmable logic devices or arrays, application specific integrated circuits, single-chip computers, and the like.

The memory 204 may be non-transitory volatile memory and/or non-volatile memory. The memory 204 may be coupled for communication with the processing unit 202, such as being a computer-readable storage medium. The processing unit 202 may execute instructions and/or code stored in the memory 204. A variety of computer-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 204 includes the module 206 stored in the form of machine-readable instructions on any of the above-mentioned storage media and may be in communication to and executed by the processing unit 202. When the machine-readable instructions are executed by the processing unit 202, the module 206 causes the processing unit 202 to efficiently render one or more scenes in a computer simulated environment.

The module 206 further comprises a data acquisition module 208, feature extraction module 210, data labelling module 212, pattern learning module 214, persona identification module 216 and knowledge base creation module 218.

The data acquisition module 208 is configured for receiving data from a plurality of software applications. The data acquisition module 208 is configured for acquiring user data such as data related to user, their persona, preferences, settings and personal information including but not limited to their role, interaction patterns with components and features within the software application, preference data like handedness, color preferences, notification preferences, brightness and contrast preferences during specific times of the day and individual customized settings, and the like. The data acquisition module 208 is configured for acquiring operational data such as data generated during the lifecycle of the application when the user performs the core functions needed to achieve the intended result and complete the assigned task, and the like. The data acquisition module 208 is configured for acquiring analytics data such as data collected to monitor and understand the performance of the application and interaction of the user with the application. This data comprises of various usage interactions including but not limited to features being used, their frequency of usage, interaction with environment components, time taken between different interactions, time taken between different interaction steps, amount of traversal of screen needed between interactions, search and lookups performed to identify the next step of task, various elements on the user interface and the user interaction with them within the context of task workflow and in the broader context of software application.

The feature extraction module 210 is configured for extracting the first set of features pertaining to objects in the application data such as coordinates of the objects from the application data, actions of the objects from the application data, and contextual understanding of objects with respect to the other objects therein and the like. The feature extraction module 210 is configured for extracting the second set of features pertaining to user interface (UI) components in the application data such as coordinates of UI components from the simulated data, design layout of the UI components from the simulated data, user interactions with the UI components from the simulated data, and contextual understanding of UI components from the simulated data, etc. The feature extraction module 210 is configured for extracting the third set of features pertaining to each predefined persona interacting with the UI components such as the third set of features are related to at least one of: objective of the persona, task of the persona, coordinates of the persona, and relative position of the persona with respect to UI components to accomplish the task, and the like.

The data labelling module 212 is configured for the first set of features, the second set of features, and the third set of features using a data labelling model. The data labelling model is trained on previously labelled data comprising objects, UI components, and personas and a relationship therebetween. The data labelling module 212 is configured for automatically labeling the first of features, the second set of features and the third set of features with different classes of different 3D objects, UI elements, environment compositions and UI compositions.

The pattern learning module 214 is configured for identifying one or more patterns in the knowledge base using a trained machine learning model. The pattern learning module 214 is configured for associating the different features with specific personas, their objectives, and the objects and UI elements that are relevant to objective and its tasks. The pattern learning module 214 is configured for clustering data for each persona in the knowledge base based on the identified patterns into one or more persona profiles.

The persona identification module 216 is configured for identifying new personas from the knowledge base based on the identified one or more patterns. The new personas are defined for personas that are not predefined for the application.

The knowledge base creation module 218 is configured for generating the knowledge base by storing the labelled data in a predefined format in the knowledge base. The predefine format is a hierarchical structure for storing information related to objects, UI components, and personas and relationships therebetween. The knowledge base creation module 218 is configured continuously updating the knowledge base with the extracted data and persona profiles generated from the extracted data.

The processing unit 202 is configured for performing all the functionality of the module 206. The processing unit 202 is configured for receiving data from a plurality of software applications that the users interact therewith. The processing unit 202 is configured for extracting a first set of features pertaining to objects in the data. The processing unit 202 is configured for extracting a second set of features pertaining to user interface (UI) components in the application data. The processing unit 202 is configured for extracting a third set of features pertaining to each predefined persona interacting with the UI components. The processing unit 202 is configured for labelling, by the processing unit, the first set of features, the second set of features, and the third set of features using a data labelling model. The processing unit 202 is configured for storing the labelled data in a predefined format in the knowledge base. The processing unit 202 is configured for continuously updating the knowledge base with the extracted data and persona profiles generated from the extracted data.

The storage unit 217 comprises the database 220 for storing the knowledge base comprising collection of application data storing identified patterns and trends from the application data, mapping of the patterns to the user personas and profiles and recommendation of user interface designs and personalized user experience based on those patterns. The storage unit 217 and/or database 220 may be provided using various types of storage technologies, such as solid state drives, hard disk drives, flash memory, and may be stored in various formats, such as relational databases, non-relational databases, flat files, spreadsheets, and extended markup files, etc.

The input unit 222 may provide ports to receive input from input devices such as keypad, touch-sensitive display, camera (such as a camera receiving gesture-based inputs), etc. capable of receiving requests for identifying new personas, identifying patterns in the application data etc.. The display unit 224 may provide ports to output data via output device with a graphical user interface for displaying insights from the knowledge base, new personas identified from the knowledge base for downstream applications based on requirements. The bus 226 acts as interconnect between the processing unit 202, the memory 204, the storage unit 217, the input unit 222, and the display unit 224.

Those of ordinary skilled in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

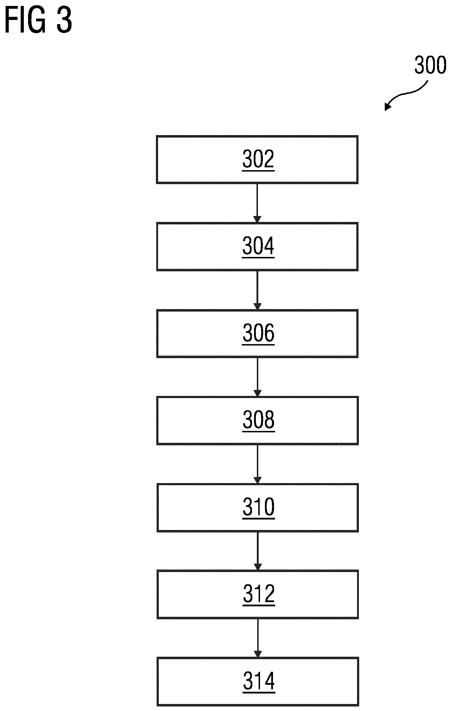

FIG 3 is a flowchart depicting steps of a method 300 for generating a self-learning knowledge base for a personalized user experience for users interacting with a software application, according to an embodiment of the present invention.

At step 302, data is received from a plurality of software applications that the users interact therewith. The data comprises application data and interactions of the users with the software applications. A software application, as described here, refers to a computer implemented system or program comprising a set of capabilities defined in form of instructions which can be processed and executed by the computing device. It is designed to perform specific functions and tasks and help the user interacting with the application achieve certain results. The software application, when running on the computing device, enables creation, change and processing of data based on user interaction via a user interface which can be a graphical user interface, a command line interface or voice interface. The software application can include, but not limited to, components that interact with external systems and other software applications, libraries and other modules. The software application is adaptable and configurable to match the user requirements. In an example, the software applications are rendered in a 2D environment. In another example, the software applications are rendered on a 3D environment. In an example, software applications are industrial applications such as Siemens PLM software including Siemens NX. Teamcenter, Technomatix, Siemens TIA portal, SIMATIC software such as SIMTAIC STEP7, SIMATIC WinCC, Mindsphere, Comos, Opcenter, SICAM, and the like.

The components of software application, as described here, refer to various elements which are part of the user interface of the software application using which the user can experience the software application, create a context of the application, and interact with it. The component can either be interactable or static in nature depending on the design and requirement of the software application and the tasks assigned to it. The interactable component, when interacted with by the user, triggers one or sequence of many instructions defined as capabilities within the software application. The static components can provide guidance to the workflow or be aesthetic in nature. The components are used to realize various design and architecture functionalities including, but not limited to, user interface design, information architecture, interaction design and usability. User interface design defines the graphical layout and static and interactive components like buttons, icons and color scheme. Information architecture refers to organization of data in a defined structured within the software application to enable efficient and intuitive navigation and workflow to accomplish a task. Interaction design and usability defines the behavior and responses of software application in response to the interaction triggered by the user as well as design considerations to make the software application user friendly and efficient. Together the interactable and static components along with the workflow required to accomplish a task define the user experience of the user. In a preferred embodiment, the one or more components of the software application comprises one or more objects, one or more UI components, and one or more predefined personas.

According to an embodiment, the data is simulated data acquired from computer simulated environments. The computer simulated environment can refer to a virtual environment generated by the software application wherein the user can interact with the components to trigger certain procedures and accomplish the desired task. This environment can be created through a combination of, but not limited to, graphical, auditory, text based and haptic input output mechanisms creating the user experience. The computer simulated environment can be 2D, 3D or haptic sensory or a combination of them. The metaverse application may comprise a plurality of computer-simulated components as part of the computer simulated environment. The computer simulated components can for example be understood as a representation, in particular 3D representation, of a real or physical component. A component can for example be an item, a product, or an object. The computer-simulated component can have different functionalities/features, e.g., an access interface. The computer-simulated component further comprises data that are component-specific, e.g., attributes/properties of a 3D design model that can be retrieved. The data acquired from the computer simulated environments is simulated data. The simulated data, as described here, refers to artificially produced data sets that are generated by the interaction of users or systems and components within a computer simulated environment. The simulated data may include, but not limited to, user behavior information, user interaction pattern, object interactions, outcome of various scenarios and workflows within the simulated environment, time taken to finish a task, time spent in the overall application, time taken to identify next step of the task.

At step 304 a first set of features pertaining to objects in the data are extracted from the application data. The first set of features are related to at least one of: coordinates of the objects from the application data, actions of the objects from the application data, and contextual understanding of objects with respect to the other objects therein.

The term "objects" as used herein refers to distinct, self-contained entities or elements within the digital scene or interface that can represent a wide variety of things. The objects can be visual, interactive, or functional components and are typically manipulated or interacted with by the user or the system. In 2D software applications, the objects are 2D images, animations representing characters, assets, tools, pipes and valves, pumps and compressors, sensors and instruments, control panels, conveyor systems, conveyor belts, motors and actuators, SCADA systems, etc. In 3D software applications, the objects are models or digital twins of assets such as cars, turbines, windmills, CNC machines, robotic arms, assembly lines, HVAC systems, control rooms, refinery units, forklifts, etc. The method comprises collecting wide array of data from the software application pertaining to the environment comprising objects rendered in the software application. The first of features pertaining to the objects are structural features that are extracted for further processing. The first set of features are coordinates of the objects from the application data, actions of the objects from the application data, and contextual understanding of objects with respect to the other objects therein. In an example, the first set of features pertaining to 2D objects such as contours, edges, texture, area, and shape are extracted using techniques like edge detection, segmentation, and moments. In another example, the first set of features pertaining to 3D objects such as surface area, volume, curvature, normal, and mesh topology are extracted by analyzing the vertices, edges, and faces of 3D meshes or point clouds.

According to an embodiment, the method of extracting the first set of features comprises identifying 3D objects from the plurality of applications using computer vision techniques. The method comprises constantly screen capturing the user journey within the application to create a sequence of images identifying the user journey and workflow through the application. Using Computer vision, key features such as geometric features, topological features, surface features, etc are identified within the screen and matched with user interaction data. The method comprises identifying compositions from the plurality of applications using semantic segmentation algorithms. Based on the screen grabs of user journey, semantic segmentation is performed on the images. Every pixel is assigned a label based on classes and categories. Based on the pixels and their densities, edges, textures and shapes are identified. Then the input is down sampled and abstract features are extracted. The method comprises extracting coordinates of the 3D objects, actions of the 3Dobjects, and relative positions of each of the 3D objects by analyzing the identified 3D objects and 3D compositions. The pixel clusters and objects identified based on computer vision algorithms are assigned an absolute coordinate if available and a relative coordinate based on origin in the image. With the user journey, relative origins are used to create a relation between different images to identify the overall coordinate of each object in the application. When a user interacts with a 3D object, the interaction is captured along with the change or action performed by the 3D object in response to that interaction. For example, if a box opens when the user clicks on it, the action and response is recorded. For a composite 3D object consisting of individual objects, the overall position of each object in the composite object is also recorded. For example, for a machine with individual parts, each identified components and feature can be marked as a 3D object, and their position and action are recorded.

At step 306, a second set of features pertaining to user interface (UI) components in the data are extracted from the application data. The second set of features are related to at least one of: coordinates of UI components from the data, design layout of the UI components from the data, user interactions with the UI components from the data, and contextual understanding of UI components from the data.

The term "UI components" as used herein refers to user interface components that are the interactive elements that users interact with in software applications, enabling control, input, and navigation. In both 2D and 3D environments, UI components provide users with tools for interacting with the application, though the design and implementation can vary based on the dimensionality of the interface. In an example, the UI components comprise of elements including but not limited to buttons, text fields, check boxes, radio buttons, dropdown menus, sliders, labels, tabs, panels, bars, icons, progress bars, modal windows, scrollbars, and the like. In another example, UI components comprise of elements including 3D sliders, 3D buttons, 3D panels, 3D knobs, 3D dials, tooltips and annotations, virtual joysticks, other holographic elements for interacting with the users.

According to an embodiment, the method of extracting the second set of features comprises identifying UI compositions and UI elements from the plurality of applications for text-based UI components using OCR techniques. The second set of features pertaining to the UI components include visual, structural, and functional characteristics. In an example, the second set of features are visual features of the UI components such as positions, size, color, shape, icons, font, text. In another example, the second set of features are structural features of the UI components such as types of components i.e. button, checkbox, slider, menu, text field, panel, etc., relationship of one UI component with other UI elements, an order of layering of the components. In another example, the second set of features are functional features of the UI components such as interactive state (for eg: if a button is disables, hovered, or clicked), actions or events triggered by a UI element, input or output data for components like text fields/forms, input data type, functional relationship between one or more UI components etc. The method comprises initiating screen grabs and identifying the second set of features based on the screen grabs by comparing them to existing definition of elements in a UI. A machine learning algorithm compares components from the image of screen grab with the predefined elements like, but not limited to, text boxes, buttons etc. and identifies components. Then the user interaction with these components is observed based on the images and they are classified as features. Once the screen grab images are collected for a user journey through the application, standard OCR technique is applied to the collection of images to identify the features. Image is preprocessed with, but not limited to: noise reduction for improving the quality of characters, normalization to adjust the contrast and brightness and standardize shapes, and skew correction to align the image and document correctly. Then the text is detected and broken down into individual sentences, paragraphs and other delimiters. Once segmentation is done, the content is broken down into features based on edges, corners and other distinguished markers. The extracted second set of features go through pattern matching to identify the text. Using this, text-based content of the UI are identified.

The method comprises identifying UI compositions and UI elements from the plurality of applications for image-based UI components using image analysis techniques. To identify buttons/icons from the screen images, image analysis is performed. Various pixels of screens are grouped together in clusters based on proximity and color profile to identify shapes and objects. These shapes are labeled based on probability by a feature extraction algorithm. The identified clusters are labeled based on highest probability. User can also provide feedback on the labeling and the feedback is used as learning by the feature extraction algorithm for the next round. The method comprises extracting coordinates of UI components, design layout of the UI components, user interactions with the UI components, and contextual understanding of UI components by analyzing the identified UI compositions and UI elements using DOM parsing techniques.

At step 308, a third set of features pertaining to each predefined persona interacting with the UI components are extracted from the data. The third set of features are related to at least one of: objective of the persona, task of the persona, coordinates of the persona, and relative position of the persona with respect to UI components to accomplish the task. The relationship between various workflows, user roles and their interaction with it, and the dialogues between user and the system, and different users are all stored in text format. The data in the context of one user is extracted. Here data refers to, but not limited to, role of user within the system, what are the tasks the role can perform, which tasks the role is actually performing, how is the user interacting with the system, what are the dialogues between two users, system and the user, objectives of the user. Additional user related information, for example a detailed profile, can also be used as the input. In a collaborative scenario, for example a support use case, the interaction between primary user and secondary user can also be recorded. All of this information is used as input for the persona identification.

According to an embodiment, the method of extracting the third set of features comprises identifying interactions between different users and the UI components from the plurality of applications by recording inputs from the users. Text and voice-based interactions, including but not limited to, between the user and the system, between multiple users, from system to user based on the actions and requests, specific workflows triggered by the user, non-system related voice prompts from the user if it is an audio video-based system, are all recorded in text format in the system logs with the user context. These logs are made available for extraction to identify the user persona. The method comprises extracting objective of the persona, task of the persona, motivation of the persona, coordinates of the persona, and relative position of the persona with respect to UI components to accomplish the task based on analyzing the inputs from the users. All the data collected in previous step is passed on an NLP based sentiment analysis algorithm which identifies the mood of the user, affinity towards various personality types and assessment of key qualities. The system has predefined clusters of qualities and personalities, and the user profile and sentiment are mapped to those personalities and profiles. A user can have an overlap of personal traits. The sentiment analysis also provides motivation of the user as well as interest and behavior patterns for the assigned tasks. Additionally, in an immersive use case like AR/VR or Metaverse use case, the position of user, gait of user, behavior and interaction of user with the system is also recorded.

According to an embodiment, the method of extracting the first set of features, the second set of features and the third set of features comprises acquiring, a source code of the software application. The term "source code" refers to a set of instructions written by a programmer using a specific programming language to create a software application. It is the human-readable, high-level code that developers write to define the behavior, structure, and functionality of the software. Source code is written in programming languages such as Python, Java, C++, or JavaScript, among others, and serves as the foundation for any software application. The method comprises parsing the software code to identify an identifier and corresponding tags associated with each of the objects, UI components, and interaction between UI components and the user. Further, the method comprises extracting the first set of features, the second set of features and the third set of features from the parsed source code.

In an exemplary embodiment, first set of features, the second set of features and the second set of features pertaining to the objects, UI components and interaction between each predefined persona and the UI components is extracted directly from the source code of the software application. The individual components can be identified based on the tags and identifiers inside the code. For example, a button will have a button tag whereas an input box will have an input tag in HTML. Based on the definition of the events on these components, different set of features are identified. For example, if a button has an on click event defined, it is a feature on which user can click and something will happen. The sourced code is structured into document object models which classify an organizing structure of various components based on tags like body. Each component has a parent component and might have children components. Parsing through these DOM structures allows identification of structure of the components in a meaningful manner. The code of the software application is parsed to identify the structure of various components relative to each other as well as contextual information since DOM also contains information about various interdependencies between various components. The structure of components, parent child relationships and their relationship with each other are extracted and stored for overall application context as fist set of features, second set of features, and third set of features.

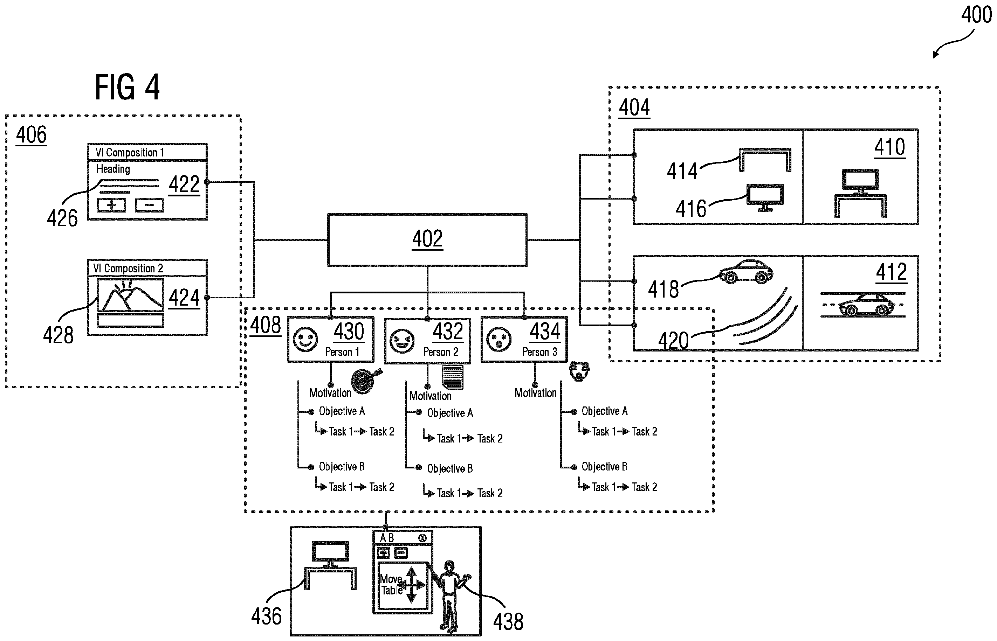

An exemplary method of extraction of features from metaverse applications is explained in detail in FIG 4. Referring to FIG 4, illustrated is a block diagram 400 depicting extraction of one or more features from the computer simulated application. As maybe seen, the software application 402, such as metaverse application 402 is used by different users 438 via a user interface 436. The first set of features 404, the second set of features 406, and the third set of features 408 are extracted from the data pertaining to the metaverse application 402. The first set of features comprises features of the first 3D composition 410 and the second 3D composition 412. The first 3D composition 410 comprises a desktop 414 on a surface 416. The second 3D composition 412 comprises a car 418 on a road 420. The first set of features 404 extracted from the 3D composition is coordinates of the objects 414, 416, 418, 420, actions of the objects 414, 416, 418, 420, and contextual understanding of objects 414, 416, 418, 420 with respect to the other objects 414, 416, 418, 420 therein. The second set of features 406 comprises features of the first UI composition 422 having a heading UI element 426 and the second UI composition having a picture element 428. The second set of features 406 extracted from the UI composition 422, 424 are coordinates of UI components 426, 428, design layout of the UI components 426, 428, user interactions with the UI components 426, 428, and contextual understanding of UI components 426, 428. The third set of features 408 are extracted from interactions of different users comprising personas 430, 432, 434 with the metaverse application. 402 The objectives and tasks of each of the personas 430, 434, 434 are recorded to extract the third set of features 408.

Referring back to FIG 3, at step 310, the first set of features, the second set of features, and the third set of features are labelled using a data labelling model. The data labelling model is trained on previously labelled data comprising objects, UI components, and personas and a relationship therebetween. The data labelling model is a machine learning model trained on data schemas defining various objects part of software applications. The labels include, but not limited to, UI components like buttons, text boxes, icons; 3D components like boxes, machines, robots, AGVs; actions associated with the components like click, pick up, mouse interaction, hover etc., responses of individual components based on these actions. The algorithm is trained based on supervised learning where each labelling iteration is observed and reinforced with feedback from a human.

At step 312, the labelled data is stored in a predefined format in the knowledge base, wherein the predefine format is a hierarchical structure for storing information related to objects, UI components, and personas and relationships therebetween. The data is stored in a semi structured, defined schema. The base unit of storage is an object. Various information related to the object are stored in a relationship form. For example, A button is the object, and its properties are stored along with it. Then, the button "has a" click function. These relationships are defined in form of ontologies and overall used to create context and traverse the database. Objects, their properties and their relative positions as well as features are all stored in a contextual manner and can be queried to identify the object, and its relationships.

In an example, the labelled data can be stored in the form of modelling languages like XML, or JSON. For this instance, an exemplary JSON template is shown below:

```
 {
 "metaverseApplications": [
  {
    "name": "EVManufacturingMetaverseApp",
    "3DCompositions": [
     {
      "name": "Floor1",
      "3DObjects": [
       {
        "name": "AssemblyMachine",
        "node": {"x": 50, "y": 10, "z": 30},
        "actions": [
          {
           "action": "Switch",
           "goal": "Turn the machine on or off",
           "impacted3DObjects": ["Assembly Machine"],
           "whatImpactOn3DObjects": ["motor stops rotating"],
           "impactedUICompositions": ["Switch"],
           "whatImpactOnUIComposition": ["Switch turns green"]
          }
          // Additional actions for AssemblyMachine can be added here
        ],
        "context": {
          "trigger":"",
          "why": "Manufacturing EVs",
          "linkedPersonas": ["Technician"],
          "linkedUICompositions": ["Switch"]
        }
       }
       // More 3D objects for Floor1 can be added here
      ]
     },
     {
      "name": "Floor2",
      "3DObjects": [
       {
        "name": "ControlPanel",
        "node": {"x": 30, "y": 15, "z": 40},
        // Actions, context, and other details for ControlPanel can be added here
       },
       {
        "name": "ElevatorRegion",
        "node": {"x": 20, "y": 5, "z": 35},
        // Actions, context, and other details for ElevatorRegion can be added
        here
       }
       // More 3D objects for Floor2 can be added here
      ]
     }
     // More 3D compositions for EVManufacturingMetaverseApp can be added
     here
    ],
    "UICompositions": [
     {
      "name": "FaultDiagnosticPanel",
      "designComprehension": [
       {
        "name": "Chart",
        "node": {"x": 20, "y": 5, "z": 35},
        "action": "View fault duration"
       },
       {
        "name": "DownloadButton",
        "node": {"x": 20, "y": 5, "z": 40},
        "action": "Download fault data"
       }
       // Additional UI elements for FaultDiagnosticPanel can be added here
      ],
      "actions": [
       {
        "name": "DownloadButton",
        "action": "Click",
        "goal": "Initiate download",
        "impacted3DObjects": "",
        "whatImpactOn3DObjects": "",
        "impactedUICompositions": "",
        "whatImpactOnUIComposition": ["change button text to Saved"]
       }
       // Additional actions for FaultDiagnosticPanel can be added here
      ],
      "context": {
       "trigger": "On user interaction",
       "why": "To initiate a process",
       "linkedPersonas": ["Technician"],
       "linked3DObjects": ["AssemblyMachine"]
      }
     }
     // More UI compositions for EVManufacturingMetaverseApp can be added
     here
    ],
    "personas": [
     {
      "name": "Technician",
      "motivation": "Resolve faults",
      "objectives": [
       {
        "objective": "View fault duration & download fault data",
        "tasks": [
          {
           "node": {"x": 50, "y": 10, "z": 30},
           "associated3DObjects": ["AssemblyMachine"],
           "associatedUICompositions": ["FaultDiagnosticPanel"],
           "actions": [
            {
             "action": "Move",
             "goal": "Approach the machine",
             "impacted3DObjects": [],
             "whatImpactOn3DObjects": ["appear"],
             "impactedUICompositions": [],
             "whatImpactOnUIComposition": ["disappear"]
            },
            {
             "action": "Click",
             "goal": "View diagnostic panel",
             "impacted3DObjects": [],
             "whatImpactOn3DObjects": [],
             "impactedUICompositions": ["FaultDiagnosticPanel"],
             "whatImpactOnUIComposition": ["changeColor"]
            },
            {
             "action": "Click",
             "goal": "Download fault data",
             "impacted3DObjects": ["AssemblyMachine"],
             "whatImpactOn3DObjects": ["move"],
             "impactedUICompositions": ["FaultDiagnosticPanel"],
             "whatImpactOnUIComposition": ["changeColor"]
            }
           ]
          }
          // Additional tasks for the objective can be added here
        ]
       }
       // More objectives for Technician can be added here
      ]
     }
     // More personas for EVManufacturingMetaverseApp can be added here
    ]
  }
  // More metaverse applications can be added here
 ]
 }
```

At step 314, the knowledge base 110 is continuously updated with the extracted data and persona profiles generated from the extracted data. The knowledge base 110 and the inputs in knowledge base 110 are used to further train the algorithm. New entries in knowledge base 110 also serve as labels across which next iteration identifies objects and their relations. For example, initially the knowledge base has a button, an icon and a text box. Once a label is identified, it is added as an object to the knowledge base 110. Additionally, the user interaction pattern with a label is also added. Now when the algorithms extract feature from another application or user journey, it can identify a label and predict the user behavior or interaction pattern with that specific object. It will be appreciated that the knowledge base is continuously updated with new set of features as extracted from plurality of software applications. The continuous update of knowledge base ensures that persona profiles are accurately determined which the basis of downstream applications.

According to an embodiment, the method comprises identifying one or more patterns in the knowledge base using a trained machine learning model. The one or more patterns comprises associating different features with specific personas, their objectives, and the objects and UI elements that are relevant to objective and its tasks. The patterns are interaction patterns of different users within their application journey based on their personality, situation, and tasks assigned. For example, a supervisor interacts with the workflow with 3 seconds between each click and no mouse movement. This can be classified as a calm interaction. Whereas in case of an emergency notification, the clicks are faster, and the mouse movement between clicks is continuous despite not doing anything. This can be identified as frantic under pressure. Another pattern could be, a user accesses icons and buttons on the left side of the screen or the right side of the screen with certain ease and is unhappy or less comfortable, indicated by mouse behavior or interaction, with button placement on the other side. This can be classified as left-handed vs right-handed user and can be used to identify the ease of usage and improve user experience.

According to embodiment, a first set of patterns are identified from the knowledge base using the machine learning model. The machine learning model is trained on node learning data for identifying objects in the knowledge base and tracking the 3D object using graph theory and semantic analysis techniques. Further, the machine learning model is trained on actions learning data for analyzing actions and behaviors associated with the 3D objects in the knowledge base using graph theory and semantic analysis techniques. Further, the machine learning model is trained on context understanding data for analyzing event logs, user behavior patterns, object interactivity records, temporal and spatial relationship between different elements such as 3D objects, UI components, and personas using graph theory and semantic analysis techniques.

The machine learning model is a complex form of sentiment analysis model with more parameters, labels and context being used to train the model and later to identify patterns. Initially the model is trained on data which defines base personality traits associated with a user of a specific persona. The data consists of information regarding how a user with specific preferences interacts with the user interface. For example, a developer will interact with complex features and identify ways to automate the system; a product manager will spend more time on the dashboards and configuring analytics; a happy user will click and wait for results with mouse resting, an angry user will constantly click at a label if they perceive the label as a button. Such data from various application usage logs are used as the base training data. Once the model has the first round of training, it goes through supervised learning, where various users of different personas interact with the system, or their interaction pattern is simulated. This data is further used to tune the model to improve the response quality of the model. Once trained, the model is fed the data from the knowledge base. The data consists of objects, their interactions, their responses, users and their personas and their interaction pattern with the application.

According to an embodiment, the second set of patterns are identified from the knowledge base by using the trained machine learning model. The machine learning model is trained on node learning data for identifying UI components in the knowledge base using graph theory and semantic analysis techniques to learn the coordinates of the UI components. Further, the machine learning model is trained on design comprehension data for identifying UI elements in the knowledge base using graph theory and semantic analysis techniques to learn how UI elements are structured to create a complete UI composition. Further, the machine learning model is trained on interaction data for identifying user behavior, input methods, gesture recognition, user feedback, using event handling mechanism in the knowledge base to learn user interaction with the UI components. Further, the machine learning model is trained on context understanding data for identifying contextual information associated with the UI elements using graph and scene analysis on the knowledge base to learn relationships about position of UI elements, choice of design of UI element, interaction provided by the UI elements, and correlation between one or more UI elements.

According to an embodiment, the third set of patterns are identified from the knowledge base by using the trained machine learning model. The machine learning model is trained on objective description data for identifying an objective of the persona from the knowledge base using sentiment analysis to learn objective and motivations of the persona in the application.

The machine learning model is trained on task identification data for identifying tasks to be performed by each persona in the application using graph theory and semantic analysis techniques to learn personas are involved in each task, their respective coordinates, and the associated 3D objects and UI elements required to accomplish these tasks. Consider an example use case where a set of factory design engineers are using an application to design their factory. Different designers might be trying to achieve different tasks, they might have different design tool preference, different design object preference and so on. Based on the description data, the workflow and the end result, machine learning model can identify the objective of the person.

The method further comprises clustering data for each persona in the knowledge base based on the identified patterns into one or more persona profiles, wherein the one or more persona profiles define behavior and interaction of each persona with the UI components. For example, a persona of developer can have further clustering as, but not limited to, happy, calm, angry, fixes bugs easily, focuses on architecture. A designer persona can have further clustering as, right-handed, left-handed, likes colors, sticks to official color patterns, creative, etc.

According to an embodiment, the method comprises identifying new personas from the knowledge base based on the identified one or more patterns, wherein the new personas are defined for personas that are not predefined for the application. A new persona is clustering of patterns based on objectives and interaction which are not yet identified within the knowledge based. As stronger clustering of patterns forms inside a persona, or without a persona, this indicates a potential persona. The knowledge base highlights these clustering and label based on probabilistic matching to the clustering. User can verify this and provide feedback or even create a new label. The new label is marked as a new persona.

According to embodiment, the method comprises identifying the persona profiles required for one or more downstream applications, and extracting, data related to the persona profiles from the knowledge base for the downstream applications. The identified persona profiles and their respective clustering are mapped to the application type, the context and the user itself. Applications which are similar to the current application can then start with the new personas and clustering within the persona, making it easier to define and identify usage pattern within those applications. Furthermore, the identified persona profiles and corresponding data in the knowledge base is used for generating user interfaces or user experiences in downstream applications.

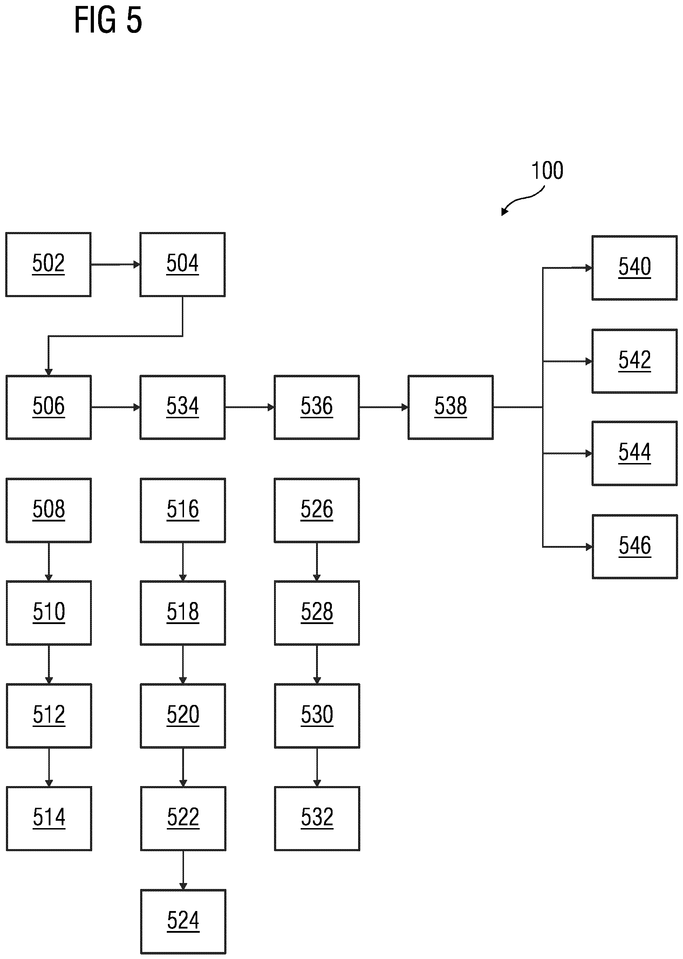

Referring to FIG 5, illustrated is a block diagram depicting the knowledge base creation framework 500, in accordance with an embodiment of the present invention. The framework 500 comprises a knowledge base creation module 502 for collecting application data from software application. The framework 500 comprises a knowledge base preprocessing module configured for identifying 3D objects, UI components and personas in the application data collected from the software applications by the knowledge base creation module 502. The preprocessed data is then labelled by the data labelling model 506 for feature extraction.

The first of features are extracted by a 3D object learning model 508. The 3D object learning model 508 is configured for extracting first set of features from the labelled data using the below models:
Node learning model 510: The 3D object learning model 508 employs the techniques Structure from Motion (SfM) and Visual Simultaneous Localization & Mapping (SLAM) algorithms for 3D object recognition and tracking and thus learns the precise coordinates (nodes) of 3D environment objects within the metaverse.

Actions learning model 512: To comprehend interactions and movements within the metaverse, the 3D object learning model 508 incorporates an action recognition component. This component analyzes the behaviors and actions associated with 3D objects, considering factors like scene & persona interactions, object animations & interactions, physical simulations, and dynamic changes in the virtual environment. The component employs Computer Vision technique to track the actions.

Context understanding model 514: Contextual information is crucial for creating meaningful 3D objects. The 3D object learning model 508 captures when, where and why an object is triggered within the scene, why specific actions are performed, and the relationships between UIs, objects, or personas. It does this by mining the contextual data available in the knowledge base, including event logs, user behavior patterns, and object interactivity records & by analyzing temporal and spatial relationship between elements of the metaverse application (UIs, objects and personas). Scene graph construction & object recognition will be used to understand why, when and how an object is triggered or manipulated.

Graph theory and semantic analysis will be used to build relationships with other 3D objects, environment and UI compositions.

In an example, the first set of features learnt about the assembly machine are: coordinates of the assembly machine, Action of switching i.e., turning the machine on or off and for the context it adds that the persona involved is the technician and the UI composition associated will be the machine fault diagnostic panel.

The second set of features are extracted by a UI learning model 516. The UI learning model 516 is configured for extracting second set of features from the labelled data using the below models:
Node learning model 518: Similar to the 3D environment, the framework employs Visual Simultaneous Localization & Mapping (SLAM) algorithm to detect the node/coordinate of the UI compositions.

Design comprehension model 520: The framework dissects UI composition into their fundamental UI elements (e.g., buttons, icons, dropdowns) and learns how these elements are structured to create complete UI elements. This process is driven by analyzing the design patterns and layouts prevalent in the knowledge base. A combination of Computer Vision, OCR (Object Character Recognition) & image analysis techniques will be employed to recognize UI elements in a UI composition.

Interaction identification model 522: The framework learns how users interact with or within UIs by studying user behavior data, including input methods, gesture recognition, and user feedback from the knowledge base. Event handling mechanism will be employed to detect interactions followed by analyzing the effects through simulation or monitoring changes in virtual environment. Contextual understanding model 524: The framework captures contextual information related to UI element. It discerns when, where and why a UI element is triggered, why a specific design composition is chosen, why certain interactions are available, and how these UI elements relate to other objects or personas. This is achieved by analyzing event sequences and user paths in the knowledge base. Graph Analysis and Scene Analysis methodologies can be used to build context for UI compositions.

In an example, the second set of features learnt about the fault diagnostic panel are coordinates of the fault diagnostic panel, Design comprehension yields that it has a chart showing the fault duration, interaction modelling shows the persona interacting with UI to download the chart, and for the context it adds that the persona involved is the technician and the 3d object associated will be the assembly machine.

The third set of features are extracted by a persona learning model 526. The persona learning model 526 is configured for extracting third set of features from the labelled data using the below models:
Motivation understanding model 528: NLP (Natural Language Processing) technique with Sentiment Analysis and topic modelling can be used to learn about a persona's motivation.

Objective definition model 530: NLP (Natural Language Processing) technique with Sentiment Analysis and topic modelling can be used to learn about a persona's objective and how they are derived from their overall motivation in the metaverse application.

Task identification model 532: Based on objectives, the framework defines tasks within the metaverse. It determines which personas are involved in each task, their respective coordinates, and the associated 3D objects and UI elements required to accomplish these tasks. Text and Scene Analysis method can be used to determine which 3D objects and UI compositions are involved in a specific task. And we use the already extracted context of 3D object and UI compositions to build the overall context for tasks with NLP, Graph and Sentiment Analysis.

In an example, the third set of features learnt about the technician persona are: objectives of the technician are to view the fault duration & download the fault data and the task identification for the objective of downloading the fault data is to start by moving towards the machine in question, clicking the button to view diagnostic panel, and then clicking the download button.

The first set of features, the second set of features and the third set of features are extracted and stored in the knowledge base 534. It should be noted that the knowledge base is continuously updated based on the new extracted set of features based on new data received from the software applications and the usage of the software application over time by different users.

Furthermore, the machine learning model 536 is configured for learning patterns in the data stored in the knowledge base 534. The first set of patterns, second set of patterns and the third set of patterns derived from knowledge base 534 using the machine learning model 536 are transmitted to a metaverse intelligence engine 538. The metaverse intelligence engine 538 is configured for making a decision on what set of patterns are to be used for which downstream applications based on different requirements of the downstream applications. In an example, the output of the metaverse intelligence engine 538 is used for different downstream applications such as are automation in metaverse 540, rendering adaptive UIs 542, rendering real-time metaverse 544, and improving NFRs 546.

Advantageously, the present invention provides a method for creating a self-learning knowledge base that continuously updates based on data received from usage of software application by different users. Furthermore, the present invention provides the knowledge base framework that evolves and learns from higher user interaction to create personas which are not defined in the database. Advantageously, the admin user or designer of a particular software application can just choose from selected personas, and the knowledge framework would evolve the application to match the persona of the user using the application. Furthermore, based on the user behavior, the present invention identifies additional personas and suggest the persona to the admin, as well as add the persona to the database for future usage.

Those skilled in the art will recognize that, unless specifically indicated or required by the sequence of operations, certain steps in the processes described above may be omitted, performed concurrently or sequentially, or performed in a different order.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### List of references

- 100: system
- 102-1 to 102-N: plurality of software applications
- 104-1 to 104-N: one or more data acquisition devices
- 106-1 to 106-N: one or more assets
- 106: apparatus
- 108: communication network
- 110: knowledge base
- 202: processing unit
- 204: memory unit
- 206: module
- 208: data acquisition module
- 210: feature extraction module
- 212: data labelling module
- 214: pattern learning module
- 216: persona identification module
- 218: knowledge base creation module
- 217: storage unit
- 220: database
- 222: input unit
- 224: output unit
- 226: bus
- 300: flowchart depicting steps of a for generating a self-learning knowledge base for a personalized user experience for users interacting with a software application
- 400: block diagram depicting extraction of one or more features from the computer simulated application
- 402: software application
- 404: first set of features
- 406: second set of features
- 408: third set of features
- 438: user
- 500: block diagram depicting the knowledge base creation framework

## Claims

1. A method (300) for generating a self-learning knowledge base (110, 534) for a personalized user experience for users (438) interacting with a software application (102-1 to 102-N, 402), the method comprising:
receiving, by the processing unit (202) data from a plurality of software applications (102-1 to 102-N, 402) that the users interact therewith, wherein the data comprises application data and interactions of the users with the software applications;
extracting, by the processing unit (202), a first set of features (404) pertaining to objects in the application data, wherein the first set of features are related to at least one of: coordinates of the objects from the application data, actions of the objects from the application data, and contextual understanding of objects with respect to the other objects therein;
extracting, by the processing unit (202), a second set of features (406) pertaining to user interface (UI) components in the application data, wherein the second set of features are related to at least one of: coordinates of UI components from the application data, design layout of the UI components from the application data, user interactions with the UI components from the application data, and contextual understanding of UI components from the application data;
extracting, by the processing unit (202), a third set of features (408) pertaining to each predefined persona interacting with the UI components, wherein the third set of features are related to at least one of: objective of the persona, task of the persona, coordinates of the persona, and relative position of the persona with respect to UI components to accomplish the task;
labelling, by the processing unit (202), the first set of features (404), the second set of features (406), and the third set of features (408) using a data labelling model (506), wherein the data labelling model is trained on previously labelled data comprising objects, UI components, and personas and a relationship therebetween;
storing, by the processing unit (202), the labelled data in a predefined format in the knowledge base (110, 534), wherein the predefined format is a hierarchical structure for storing information related to objects, UI components, and personas and relationships therebetween; and
continuously updating, by the processing unit (202), the knowledge base (110, 534) with the extracted data and persona profiles generated from the extracted data.

2. The method (300) according to claim 1, further comprising:
identifying, by the processing units (202), one or more patterns in the knowledge base (110, 534) using a trained machine learning model (536), wherein the one or more patterns comprises associating different features with specific personas, their objectives, and the objects and UI elements that are relevant to objective and its tasks; and
clustering, by the processing unit (202), data for each persona in the knowledge base based on the identified patterns into one or more persona profiles, wherein the one or more persona profiles define behavior and interaction of each persona with the UI components.

3. The method (300) according to any of the claims 1 or 2, further comprising identifying new personas from the knowledge base (110, 534) based on the identified one or more patterns, wherein the new personas are defined for personas that are not predefined for the software application (102-1 to 102-N, 402).

4. The method (300) according to any of the preceding claims, wherein the data is simulated data acquired from computer simulated environments.

5. The method (300) according to any of the preceding claims, wherein extracting the first set of features (404) comprises:
identifying, by the processing unit (202), 3D objects from the plurality of software applications (102-1 to 102N, 402) using computer vision techniques;
identifying, by the processing unit (202), 3D compositions from the plurality of software applications using semantic segmentation algorithms;
extracting, by the processing unit (202), coordinates of the 3D objects, actions of the 3Dobjects, and relative positions of each of the 3D objects by analyzing the identified 3D objects and 3D compositions.

6. The method (300) according to any of the claim 1 to 3, wherein extracting the second set of features (406) comprises:
identifying, by the processing unit (202), UI compositions and UI elements from the plurality of software applications (102-1 to 102-N, 402) for text-based UI components using OCR techniques;
identifying, by the processing unit (202), UI compositions and UI elements from the plurality of software applications (102-1 to 102-N, 402) for image-based UI components using image analysis techniques;
extracting, by the processing unit (202), coordinates of UI components, design layout of the UI components, user interactions with the UI components, and contextual understanding of UI components by analyzing the identified UI compositions and UI elements using DOM parsing techniques.

7. The method (300) according to any of the claims 1 to 3, wherein extracting the third set of features (408) comprises:
identifying, by the processing unit (202), interactions between different users and the UI components from the plurality of applications by recording inputs from the users (438);
extracting, by the processing unit (202), objective of the persona, task of the persona, motivation of the persona, coordinates of the persona, and relative position of the persona with respect to UI components to accomplish the task based on analyzing the inputs from the users (438).

8. The method (300) according to any of the preceding claims, wherein extracting the first set of features (404), the second set of features (406) and the third set of features (408) comprises:
acquiring, a source code of the software application (102-1 to 102-N, 402);
parsing, by the processing unit (202), the software code to identify an identifier and corresponding tags associated with each of the objects, UI components, and interaction between UI components and the user (438);
extracting the first set of features (404), the second set of features (406) and the third set of features (408) from the parsed source code.

9. The method (300) according to any of the preceding claims, wherein a first set of patterns are identified from the knowledge base (110) by using the trained machine learning model, wherein the machine learning model is trained on:
node learning data for identifying objects in the knowledge base and tracking the 3D object using graph theory and semantic analysis techniques;
actions learning data for analyzing actions and behaviors associated with the 3D objects in the knowledge base using graph theory and semantic analysis techniques; and
context understanding data for analyzing event logs, user behavior patterns, object interactivity records, temporal and spatial relationship between different elements such as 3D objects, UI components, and personas using graph theory and semantic analysis techniques.

10. The method (300) according to any of the claims 1 to 8, wherein a second set of patterns are identified from the knowledge base (110) by using the second trained machine learning model, wherein the second machine learning model is trained on:
node learning data for identifying UI components in the knowledge base using graph theory and semantic analysis techniques to learn the coordinates of the UI components;
design comprehension data for identifying UI elements in the knowledge base using graph theory and semantic analysis techniques to learn how UI elements are structured to create a complete UI composition;
interaction data for identifying user behavior, input methods, gesture recognition, user feedback, using event handling mechanism in the knowledge base to learn user interaction with the UI components;
context understanding data for identifying contextual information associated with the UI elements using graph and scene analysis on the knowledge base to learn relationships about position of UI elements, choice of design of UI element, interaction provided by the UI elements, and correlation between one or more UI elements.

11. The method (300) according to any of the claims 1 to 8, wherein a third set of patterns are identified from the knowledge base (110, 534) by using the second trained machine learning model, wherein the second machine learning model is trained on:
objective description data for identifying an objective of the persona from the knowledge base using sentiment analysis to learn objective and motivations of the persona in the software application (102-1 to 102-N, 402);
task identification data for identifying tasks to be performed by each persona in the application using graph theory and semantic analysis techniques to learn personas are involved in each task, their respective coordinates, and the associated 3D objects and UI elements required to accomplish these tasks.

12. The method (300) according to any of the preceding claims, further comprising:
identifying, by the processing unit (202), the persona profiles required for one or more downstream applications (540, 542, 544, 546); and
extracting, by the processing unit (202), data related to the persona profiles from the knowledge base (110, 534) for the downstream applications.

13. An apparatus (106) for generating a self-learning knowledge base (110, 534) for a personalized user experience for users (438) interacting with a software application (102-1 to 102-N, 402), the apparatus comprising:
one or more processing units (202);
a memory (204) communicatively coupled to the one or more processing units (202), the memory comprising a module (206) stored in the form of machine-readable instructions executable by the one or more processing units, wherein the module is configured to perform the method steps according to claims 1 to 12.

14. A system (100) for generating a self-learning knowledge base (110, 534) for a personalized user experience for users (438) interacting with a software application (102-1 to 102-N, 402), the system comprising:
one or more data acquisition devices (104-1 to 104-N), for acquiring application data from the plurality of software applications (102-1 to 102-N);
a database (220) for storing the knowledge base (110, 534) acquired from a plurality of software applications; and
an apparatus (106) according to claim 10, communicatively coupled to the knowledge base (110, 534), wherein the apparatus is configured for generating a self-learning knowledge base for a personalized user experience for users interacting in a computer-simulated environment, according to any of the method claims 1 to 12.

15. A computer-program product, having computer-readable instructions stored therein, that when executed by a processing unit, cause the processing unit to perform method steps according to any of the claims 1 to 12.

16. A computer readable medium on which program code sections of a computer program are saved, the program code sections being loadable into and/or executable in a system to make the system execute the method steps according to any of the claims 1 to 12 when the program code sections are executed in the system.
